# EUROPÄISCHE PATENTSCHRIFT

(11) **EP 3 424 699 B1**
(45) Veröffentlichungstag und Bekanntmachung des Hinweises auf die Patenterteilung: **10.07.2019**
(21) Anmeldenummer: 18000545.6
(22) Anmeldetag: 20.06.2018
(51) Int. Cl.: B32B 5/02, B32B 5/18, B32B 5/22, B32B 5/24, B32B 5/26, B32B 27/04, B32B 3/18, B64C 1/00, C08J 5/24, B60Q 3/74, B60Q 3/20, B60Q 3/43

(54) **PANEEL FÜR EIN FLUGGERÄT**
PANEL FOR AN AERIAL VEHICLE
PANNEAU POUR UN AÉRONEF

(30) Priorität: 08.07.2017 DE 102017006491
(43) Veröffentlichungstag der Anmeldung: 09.01.2019
(73) Patentinhaber: Diehl Aviation Laupheim GmbH, 88471 Laupheim (DE)
(72) Erfinder: Staudigel, Norbert, 89233 Neu-Ulm (DE); Pfetscher, André, 89079 Ulm (DE)
(74) Vertreter: Diehl Patentabteilung

(56) Entgegenhaltungen:
- DE-A1-102012 108 745
- DE-A1-102014 006 751

## Beschreibung

Die Erfindung betrifft ein Paneel für ein Fluggerät.

Sandwichbauteile sind aus der Praxis insbesondere als Paneele im Luftfahrtsektor, insbesondere als Wand- oder Deckenpaneele zur Gestaltung eines Innenraums bzw. einer Passagierkabine eines Passagierflugzeuges bekannt. Beispielsweise offenbart die DE 10 2012 108 745 A1 ein Paneel, umfassend zwei Deckschichten und eine dazwischen liegende Kernschicht.

In Bezug auf derartige Sandwichbauteile kann sich die Problematik ergeben, Wärme abführen zu müssen. Dies ist zum Beispiel der Fall, wenn Wärme abgebende Bauteile wie elektrische oder elektronische Bauteile, beispielsweise Lichtquellen bzw. deren Netzteile, z.B. Beleuchtungselemente in Flugzeugkabinen, an derartigen Paneelen installiert sind. Aus der DE 10 2014 006 751 A1 ist es bekannt, in LED-Beleuchtungselementen für Fluggeräte Sandwich-Verbundplatten als Trägerelemente einzusetzen, in die ein Wärmeweiterleitungskörper eingebracht ist, der aus Graphitschaum bestehen kann. Problematisch ist dabei jedoch, dass Graphitschaum wenig druckstabil ist.

Aufgabe der vorliegenden Erfindung ist es, eine verbesserte Lösung für die oben geschilderte Problematik anzugeben.

Die Aufgabe wird gelöst durch ein Paneel gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Paneel umfasst ein Tragelement und eine auf dem Tragelement angebrachte Wärmequelle. Das Tragelement enthält ein Sandwichbauteil. Insbesondere ist das Tragelement ein Sandwichbauteil. Das Sandwichbauteil enthält mindestens zwei Deckschichten. Jede Deckschicht ist in Form eines Prepreg-Materials ausgeführt. Das Sandwichbauteil enthält außerdem mindestens eine Kernschicht, die zwischen den Deckschichten angeordnet ist. Insbesondere sind genau zwei Deckschichten und genau eine Kernschicht vorhanden. Vorzugsweise besteht das Sandwichbauteil aus zwei Deckschichten und einer zwischen den Deckschichten angeordneten Kernschicht.

Die Kernschicht enthält mindestens ein erstes Strukturelement. Dieses Strukturelement ist in Form eines mechanisch instabilen Wärmeleitmaterials ausgeführt. Die Kernschicht enthält mindestens ein zweites Strukturelement. Dieses Strukturelement ist in Form eines mechanisch stabilen Prepreg-Materials ausgeführt. Die Begriffe "stabil" und "instabil" bezeichnen hier die Relation zueinander, d.h. dass das Wärmeleitmaterial mechanisch instabiler als das Prepreg-Material ist, wobei dies für den ausgehärteten Zustand des Prepreg-Materials gilt.

Das Paneel dient zur Verwendung in einem Fluggerät. Das Fluggerät ist insbesondere ein Passagierflugzeug, das Paneel insbesondere als Kabinenbauteil für eine Passagierkabine vorgesehen und ist vorzugsweise als Wand- und/oder Deckenpaneel ausgestaltet. Die oben erläuterten Vorteile der Erfindung werden somit insbesondere für Wand- und/oder Deckenkonstruktionen in Fluggeräten genutzt. Ein Wand- und/oder Deckenpaneel in Form eines entsprechenden Paneels bzw. Sandwichbauteils mit mechanisch stabilen Eigenschaften und guter Wärmeleitfähigkeit ist besonders für den Flugeinsatz von Vorteil, um bei guter mechanischer Stabilität Wärme über das Paneel ableiten zu können.

Ein aus der Praxis bekannter Aufbau eines Sandwichbauteils ist die Verwendung einer mechanisch vergleichsweise stabilen Wabenschicht als Kernschicht zwischen zwei Prepreg-Schichten als Deckschichten. So entsteht ein mechanisch stabiles Sandwichbauteil. Gemäß der Erfindung wird ein Sandwichbauteil vorgeschlagen, welches aufgrund der Verwendung des Wärmeleitmaterials eine gute Wärmeableitung gewährleistet. Obschon das Wärmeleitmaterial mechanisch instabil ist, gleichzeitig jedoch in der Kernschicht mechanisch stabiles Prepreg-Material in Form der zweiten Strukturelemente verwendet wird, erlangt das Sandwichbauteil insgesamt wieder ausreichend mechanische Stabilität.

Durch den erfindungsgemäßen Aufbau kann also Wärme von der Wärmequelle durch das Sandwichbauteil abgeführt werden und gleichzeitig die Wärmequelle ausreichend stabil von Tragelement bzw. Sandwichbauteil getragen werden.

Als Wärmequellen kommen insbesondere elektronische oder elektrische Bauteile in Betracht. Diese erzeugen Verlustleistung in Form von Wärme. Es kann sich dabei um mit entsprechenden Bauteilen bestückte Platinen oder andere Elektronikkomponenten wie Netzteile, Treiberschaltungen, Halbleiterbauelemente oder elektrische Widerstände handeln.

In einer bevorzugten Ausführungsform ist das Wärmeleitmaterial ein Graphitschaum. Ein derartiger Graphitschaum wird auch als Blähgraphit bezeichnet. Das entsprechende Material ist mechanisch instabil im Vergleich zu einem stabilen Prepreg-Material und würde sich an sich nicht als Kernmaterial für ein Sandwichbauteil eignen, wenn dieses ausreichend mechanische Stabilität aufweisen soll. Durch die Ergänzung des Wärmeleitmaterials mit den mechanisch stabilen zweiten Strukturelementen kann jedoch auch Graphitschaum in einem schlussendlich mechanisch stabilen Sandwichbauteil verwendet werden.

In einer bevorzugten Ausführungsform ist mindestens eines der zweiten Strukturelemente, insbesondere alle jeweils, mit beiden Deckschichten verbunden. Die beiden Deckschichten und das zweite Strukturelement bilden somit eine mechanisch feste Struktur, insbesondere eine rahmenartige Struktur beziehungsweise einen Rahmen, zum Beispiel nach Art eines Gitters. Insbesondere entsteht im ausgehärteten Zustand der Prepreg-Materialien durch das zweite Strukturelement eine die beiden Deckschichten verbindende Wand, ein Steg oder ähnliches. So ergibt sich eine mechanisch besonders feste Struktur, die dennoch zwischen den Deckschichten und zwischen jeweiligen zweiten Strukturelementen Raum lässt, um die ersten Strukturelemente aufzunehmen.

In einer bevorzugten Variante dieser Ausführungsform enthält die Kernschicht eine Mehrzahl von ersten Strukturelementen. Jedes der ersten Strukturelemente ist leisten- bzw. stangen- bzw. stabartig ausgebildet. Jedes der ersten Strukturelemente erstreckt sich jeweils entlang einer Längslinie. Die Längslinien verlaufen nebeneinander. Jeweils mindestens ein zweites Strukturelement in Form eines die Deckschichten verbindenden Steges (im ausgehärteten Zustand des Prepregs) ist zwischen jeweils zwei benachbarten ersten Strukturelementen angeordnet. Insbesondere für ein ebenes Sandwichbauteil kann die Längslinie eine Längsgerade beziehungsweise Längsstrecke sein. Die entsprechenden Geraden oder Strecken verlaufen dann parallel zueinander. Im Ergebnis ist das Sandwichbauteil insbesondere nach Art einer Doppelstegplatte aufgebaut, wobei die jeweiligen "Stege", welche die beiden Deckschichten bzw. Flachseiten verbinden, durch jeweilige zweite Strukturelemente gebildet sind. Die Räume zwischen den Stegen enthalten die ersten Strukturelemente, sind insbesondere mit diesen vollständig ausgefüllt. Die Stege verlaufen dabei insbesondere quer zu den beiden Deckschichten.

Somit entsteht ein Sandwichbauteil nach Art einer Doppelstegplatte, welches mechanisch stabil ist und eine gewünschte wärmeleitende Eigenschaft aufweist. Gemäß der Erfindung wird also die mechanische Stabilität einer Doppelstegplatte mit der gewünschten Wärmeleitfähigkeit ergänzt.

Herkömmliche Doppelstegplatten, wie sie beispielsweise für Überdachungen etc. genutzt werden, weisen dagegen in der Regel ein möglichst gutes Wärmeisolierverhalten auf, um beispielsweise eine kühlende Beschattung eines überdachten Sitzplatzes zu bewirken.

In einer bevorzugten Ausführungsform ist das Paneel ein Einbauteil für ein Fluggerät. Insbesondere erfüllt es die entsprechenden Kriterien für eine entsprechende Luftfahrtzulassung, zum Beispiel in Bezug auf Brandschutz. Das Fluggerät ist insbesondere ein Flugzeug, insbesondere ein Passagierflugzeug. Das Einbauteil ist insbesondere ein Wand- oder Deckenpaneel, insbesondere zur Gestaltung einer Passagierkabine.

Das Sandwichbauteil kann nach folgendem Verfahren hergestellt werden. Bei dem Verfahren wird mindestens eines der ersten Strukturelemente zumindest teilweise mit einem Prepreg-Material umhüllt. Das Prepreg-Material bildet also eine Umhüllung des ersten Strukturelements. Das oder die umhüllten Strukturelemente werden zwischen zwei schichtförmige Prepreg-Materialien eingebracht. Jedes dieser schichtförmigen Materialien bildet zumindest einen Teil einer der Deckschichten. Zumindest ein Teil der Umhüllung, also des Prepreg-Materials bildet zumindest einen Teil eines der zweiten Strukturelemente. Die Prepreg-Materialien werden ausgehärtet, um das Sandwichbauteil fertigzustellen.

Die Umhüllung in Form des Prepreg-Materials, welches die ersten Strukturelemente umgibt, erfüllt damit eine Doppelfunktion. Zum einen werden die ersten Strukturelemente während des Zusammenbaus des Sandwichbauteils dadurch besser handhabbar, insbesondere, wenn diese porös, brüchig oder in sonstiger Weise schwierig zu handhaben sind. Zum anderen wird ein Teil der Umhüllung (Stegabschnitt) zumindest zu einem Teil eines der zweiten Strukturelemente.

Insbesondere verbindet sich beim Aushärten zumindest ein weiterer Teil der Umhüllung (Deckabschnitt) mit einer der schichtförmigen Prepreg-Materialien und bildet so die Deckschicht als mechanisch feste Einheit. Ein weiterer Teil der Umhüllung (Stegabschnitt) bildet zumindest einen Teil der zweiten Strukturelemente, insbesondere einen Steg, der die beiden Deckschichten verbindet. Gemäß dem Verfahren lässt sich ein entsprechendes Sandwichbauteil besonders einfach und effektiv herstellen. Um schließlich das Paneel zu erhalten, wird das Sandwichbauteil ggf. mit weiteren Komponenten versehen, so dass das Tragelement gebildet wird. Auf diesem wird dann die Wärmequelle angebracht.

Insbesondere wird als Umhüllung ein Prepreg-Material verwendet, das dünner als das Prepreg-Material mindestens einer der Deckschichten ist. Ein entsprechend dünnes Prepreg-Material lässt sich besonders leicht um ein erstes Strukturelement herumschlagen beziehungsweise sich dieses damit umhüllen. Durch eine Verbindung (von Teilen) zweier benachbarter Umhüllungen, die dann gemeinsam ein zweites Strukturteil bilden, entstehen so bei leichter Handhabung dennoch stabile zweite Strukturelemente. Die Deckschichten können problemlos und in stabiler Weise aus dickerem Prepreg-Material gefertigt werden. Auch so lässt sich das erfindungsgemäße Sandwichbauteil besonders stabil und dennoch einfach herstellen.

In einer bevorzugten Ausführungsform ist die Wärmequelle eine Lichtquelle. Das Paneel fungiert somit als Beleuchtungselement. Das Beleuchtungselement enthält ein Tragelement und eine auf dem Tragelement angebrachte Lichtquelle. Das Tragelement enthält ein erfindungsgemäßes Sandwichbauteil. Insbesondere ist das Tragelement ein solches Sandwichbauteil. So kann insbesondere Wärme von der Lichtquelle durch das Sandwichbauteil abgeführt werden und gleichzeitig die Lichtquelle ausreichend stabil vom Sandwichbauteil getragen werden.

Die Wärmequelle bzw. Lichtquelle ist insbesondere eine LED-Lichtquelle, insbesondere eine LED-Flächenleuchte beziehungsweise -Flächenlichtquelle. Die wärmeabführenden Eigenschaften des Sandwichbauteils können so insbesondere für die Wärmeabfuhr genutzt werden, die von der entsprechenden Wärmequelle bzw. Lichtquelle benötigt wird.

In einer bevorzugten Ausführungsform ist die Wärmequelle bzw. Lichtquelle eine sich flächig erstreckende Lichtquelle, die auf eine Flachseite des Tragelements aufgebracht ist. So können insbesondere Sandwichbauteile und somit Paneele mit Flächenlichtquellen ausgerüstet werden, wobei eine Wärmeabfuhr von der Flächenlichtquelle bei deren stabiler mechanischer Montage sichergestellt ist.

In einer bevorzugten Ausführungsform erstreckt sich die Wärmequelle bzw. Lichtquelle - insbesondere eine LED-Flächenleuchte - über die (bis auf nicht nennenswerte Randbereiche, s.u.) gesamte Flachseite des Tragelements. Am Tragelement verbleiben somit keine Randbereiche, die für eine nennenswerte Wärmeabfuhr genutzt werden könnten. Dank der Erfindung erfolgt die Wärmeabfuhr jedoch durch das Sandwichelement hindurch beziehungsweise über dessen Inneres, sodass eine ausreichende Wärmeabfuhr dennoch sichergestellt werden kann.

In einer bevorzugten Ausführungsform enthält das Paneel bzw. das Beleuchtungselement ein Versorgungsgerät für die Wärmequelle bzw. Lichtquelle, die auf einer Flachseite des Beleuchtungselements montiert ist. Das Versorgungsgerät ist auf der, der Wärmequelle bzw. Lichtquelle gegenüberliegenden Flachseite des Tragelements angebracht. Ein derartiges Versorgungsgerät ist zum Beispiel ein Netzteil für eine LED-Lichtquelle. Somit bewirkt das Sandwichbauteil bei Bedarf nicht nur eine Wärmeabfuhr von der Lichtquelle, sondern auch von dem Versorgungsgerät, welches ebenfalls als Wärmequelle fungiert. So kann ein besonders kompaktes und stabiles Beleuchtungselement geschaffen werden, bei dem dennoch über das Sandwichbauteil eine ausreichende Wärmeabfuhr für die Wärmequelle bzw. Lichtquelle und das Versorgungsgerät sichergestellt sind.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Bei Paneelen im Flugzeugbau ist es aus der Praxis bekannt, im Bereich einer Leuchte ein Aluminiumblech oder einen Aluminiumkühlkörper zu verwenden. Insbesondere bei großflächigen Leuchten, wie beispielsweise LED-Flächenleuchten, ist die entsprechend benötigte Fläche sehr groß. Auf der Rückseite, also der der Kabine abgewandten Seite der Leuchte ist außerdem eine Spannungsversorgung in Form eines Netzteils beziehungsweise Moduls zur Versorgung der Leuchte zu montieren. Aus Stabilitätsgründen muss daher ein vergleichsweise dickes Blech oder Platte verwendet werden.

Denkbar wäre es, ein dünneres Blech zu verwenden und eine Sandwichplatte als Stützelement zu verwenden. Dies erscheint jedoch nicht praktikabel, da die Sandwichplatte eine (wärme-)isolierende Wirkung besitzt und einen Wärmestau verursacht.

Bei entsprechenden Aluminiumplatten oder Kühlkörpern sind zudem zusätzliche Maßnahmen zur Erdung des Bleches beziehungsweise des Kühlkörpers erforderlich.

Eine aus der Praxis bekannte Lösung ist das Aufkleben von wärmeleitenden Materialien auf eine Sandwichgrundplatte.

Die Erfindung beruht ferner auf der Erkenntnis, dass Graphitschaumplatten aus Blähgraphit wenig druckstabil und extrem brüchig sind. In dieser Form sind sie als Kernmaterial im Flugzeugsandwichbau daher nicht verwendbar. Gemäß der Erfindung wird allerdings die Graphitschaumplatte in Streifen geschnitten, diese mit dünnem Prepreg ummantelt und zusammen mit einem Boden- und Deck-Prepreg zu einer Platte oder Form ausgehärtet. So entsteht ein extrem belastbares Paneel.

Gemäß der Erfindung ergibt sich die Ableitung der Wärme einer flächigen (Decken-) Beleuchtung durch das Paneel hindurch auf die Rückseite. So tragen beide Seiten des Paneels zur Kühlung bei. Gemäß der Erfindung wird der Graphitschaum in gleichmäßige Streifen geschnitten und mit dünnem Prepreg ummantelt. Diese Pakete werden als Kernmaterial auf dem Boden-Prepreg abgelegt und mit dem Deck-Prepreg abgedeckt. Nach dem Aushärten entstehen an den Stoßstellen zwischen den Graphitstreifen Brücken aus ausgehärtetem Prepreg, die die Verbindung zwischen Deck- und Bodenfläche stark verbessern.

Dadurch, dass es mit der Erfindung gelungen ist, den Graphitschaum stabil in Prepregs zu kapseln und zu einer Fläche zu vereinigen, kann das Material tragende Funktion übernehmen. Gegenüber einer auf Metall (Aluminiumplatten, s.o.) basierenden Lösung wird massiv Gewicht eingespart. Wärmeleitung wird durch das Kernmaterial ermöglicht. Ebenso wird die Brennbarkeit des Paneels herabgesetzt. Der Nachteil einer elektrisch leitenden (Aluminium-)Platte wird umgangen, da das Sandwichbauteil elektrisch isoliert. Ein Bonding, also eine Erdung, entsprechender metallischer Teile (der Aluminiumplatte) ist nicht notwendig, da eine solche nicht mehr vorhanden ist. Durch die hohe (mechanische) Stabilität können Gerätschaften auf der Platte installiert werden, z.B. ein Netzteil für eine Lichtquelle.

Gemäß der Erfindung wird ein Kernmaterial (Graphitschaum) in Form (in Prepreg) eingewickelter Leisten (in das Sandwichbauteil) eingebracht, anstatt vollflächig (d.h. als Graphitschaumschicht oder -platte). Gemäß der Erfindung ergibt sich eine Nutzung von leichtem Blähgraphit für die wärmetechnischen Eigenschaften (Ableitung von Wärme mit Hilfe eines Sandwichbauteils) und die Umgehung von deren mechanischen Nachteilen (fehlende mechanische Stabilität von Blähgraphit).

Gemäß der Erfindung lässt sich ein Paneel, insbesondere Deckenpaneel mit flächig aufgebrachter LED-Beleuchtung realisieren, wobei die Leuchtfläche so groß ist (die gesamte Paneelflachseite bedeckt), dass zur Seite keine nennenswerte Wärmeabgabe (über nicht von der Leuchtfläche bedeckte Randbereiche der Flachseite) mehr möglich ist.

Gemäß der Erfindung ergibt sich ein belastungsfähiger, leichter Sandwichaufbau mit Graphitschaumkern zur thermischen Kopplung/Kühlung von thermischen Komponenten.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Figur 1: ein Sandwichbauteil,
- Figur 2: das Sandwichbauteil aus Fig. 1 in einem Vorfertigungszustand,
- Figur 3: ein Paneel mit dem Sandwichbauteil aus Fig. 1.

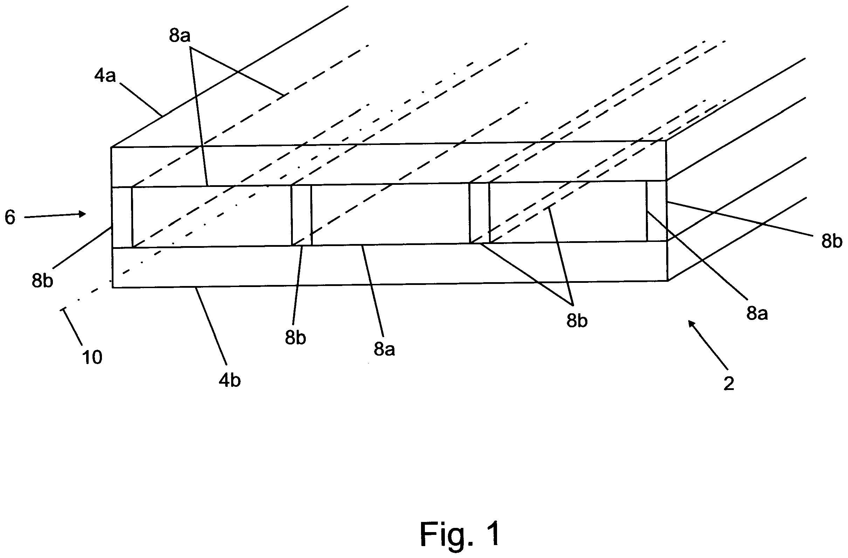

Figur 1 zeigt angedeutet eine perspektivische Darstellung eines Sandwichbauteils 2 mit einer ersten Deckschicht 4a und einer zweiten Deckschicht 4b, jeweils in Form eines hier bereits ausgehärteten Prepreg-Materials. Zwischen den beiden Deckschichten 4a, b ist eine Kernschicht 6 angeordnet. Die Kernschicht 6 enthält im Beispiel drei erste Strukturelemente 8a, jeweils in Form eines mechanisch vergleichsweise (s.u.) instabilen Wärmeleitmaterials, hier Graphitschaum beziehungsweise Blähgraphit. Weiterhin enthält die Kernschicht 6 vier zweite Strukturelemente 8b, jeweils in Form eines vergleichsweise mechanisch stabilen (also stabiler als die Strukturelemente 8a), hier ebenfalls ausgehärteten Prepreg-Materials.

Figur 1 zeigt das Sandwichbauteil 2 also im endgefertigten Zustand, wenn die Prepreg-Materialien ausgehärtet sind. Jedes der zweiten Strukturelemente 8a ist jeweils mit den beiden Deckschichten 4a,b verbunden und bildet daher jeweils einen, die beiden Deckschichten 4a,b mechanisch stabil miteinander verbindenden Steg. Jedes der ersten Strukturelemente 8a ist leisten- stab oder stangenartig ausgebildet und erstreckt sich entlang einer jeweiligen Längslinie 10, hier einer jeweiligen Geraden (nur eine von diesen ist gezeichnet). Die Längslinien 10 beziehungsweise Geraden verlaufen nebeneinander, hier parallel. Jeweils zwischen zwei ersten Strukturelementen 8a und seitlich begrenzend neben den jeweils äußersten Strukturelementen 8a ist jeweils ein zweites Strukturelement 8b angeordnet. Das Sandwichbauteil 2 ist daher nach Art einer Doppelstegplatte ausgebildet, wobei die "Hohlräume" (Bereich der Strukturelemente 8a) zwischen den jeweiligen "Stegen" (Strukturelemente 8b) und den Deckschichten 4a,b mit Blähgraphit beziehungsweise Graphitschaum gefüllt sind. Das Sandwichbauteil 2 ist ein Wandpaneel, alternativ ein Deckenpaneel zum Einbau in eine nicht dargestellte Passagierkabine eines nicht dargestellten Flugzeuges.

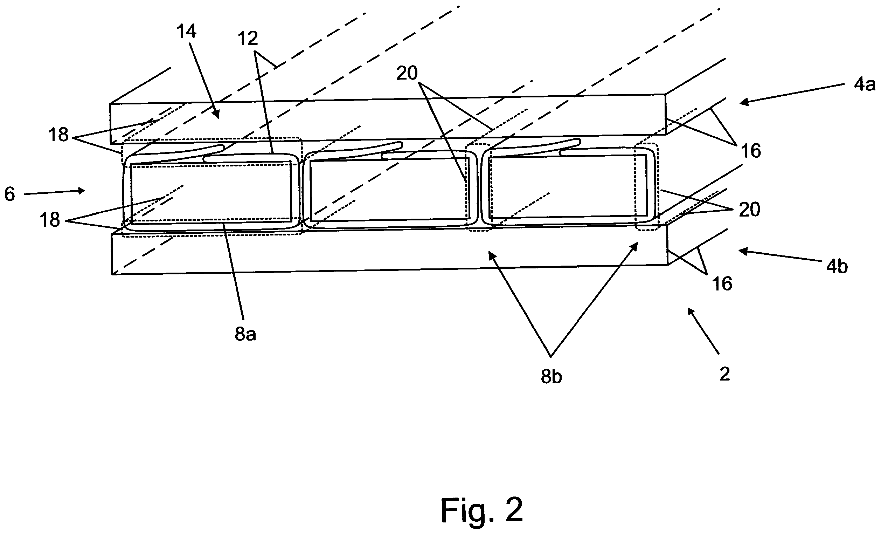

Figur 2 zeigt das Sandwichbauteil 2 aus Figur 1 während der Herstellung und vor dem Aushärten der Prepreg-Materialien. Die jeweiligen ersten Strukturelemente 8a werden als Leisten bereitgestellt und jeweils mit einem vergleichsweise (s.u.) dünnen Prepreg-Material 12 umwickelt beziehungsweise umhüllt. Das Prepreg-Material 12 bildet somit eine jeweilige Umhüllung 14 für eine jeweilige der Graphitschaumleisten in Form der ersten Strukturelemente 8a. Die ersten Strukturelemente 8a mit ihren Umhüllungen 14 werden zwischen die zwei vergleichsweise dicken (also dicker als das Material der Umhüllung 14) Prepreg-Materialien 16 eingebracht. In Figur 2 sind zur Verdeutlichung jeweilige Abstände zwischen Materialien und Strukturteilen gezeichnet, welche in der Praxis nicht vorhanden sind.

Die Struktur gemäß Figur 2 wird dann ausgehärtet. Hierbei verbinden sich beziehungsweise verschmelzen jeweilige (durch Umrahmung angedeutete) Deckabschnitte 18 der dünnen Prepreg-Materialien 12 beziehungsweise Umhüllungen 14 mit den dicken Prepreg-Materialien 16 und bilden zusammen jeweils die Deckschichten 4a, b. Jeweilige (durch Umrahmung angedeutete) Stegabschnitte 20 zweier benachbarter Umhüllungen 14 verbinden sich miteinander. Außerdem verbinden sie sich an ihren in Figur 2 jeweiligen oberen und unteren Rändern beziehungsweise Stirnseiten mit den dicken Prepreg-Materialien 16 und bilden somit Stege in Form der zweiten Strukturelemente 8b, die die Deckschichten 4a,b miteinander verbinden.

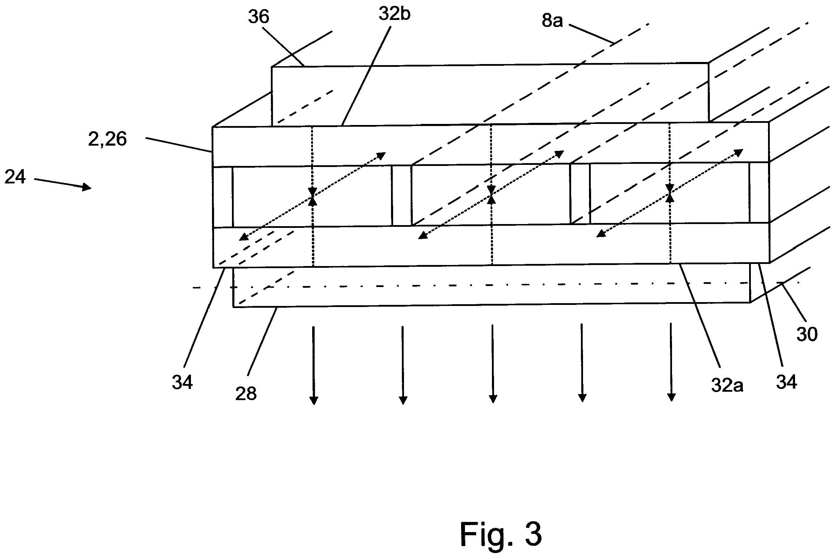

Figur 3 zeigt ein als Beleuchtungselement ausgestaltetes Paneel 24 für das nicht dargestellte Flugzeug mit einem Tragelement 26, auf dem eine als Lichtquelle ausgestaltete Wärmequelle 28 angebracht ist. Von der Wärmequelle 28 im Betrieb ausgesendetes Licht ist durch Pfeile angedeutet. Das Tragelement 26 ist das Sandwichbauteil 2 aus Figur 1 in Form eines Deckenpaneels. Die Wärmequelle 28 ist eine sich flächig erstreckende Lichtquelle, wobei die Erstreckungsfläche durch eine Linie 30 angedeutet ist. Die Wärmequelle 28 ist auf einer ersten (unteren) Flachseite 32a des Tragelements 26 angeordnet beziehungsweise erstreckt sich über die (nahezu) gesamte Flachseite. Die Wärmequelle 28 ist eine LED-Flächenleuchte. Somit verbleiben lediglich für eine Wärmeabgabe nicht nennenswerte Randbereiche 34 neben der Wärmequelle 28 an der Flachseite 32a, die an sich für eine Kühlung der Wärmequelle 28 nicht ausreichen. Die Kühlung erfolgt durch - in der Figur durch gestrichelte Pfeile angedeuteten) Wärmeabtransport über das Innere des Sandwichbauteils 2 beziehungsweise dessen Graphitschaumleisten.

Ein Versorgungsgerät 36 für die Wärmequelle 28, hier ein Netzteil, ist auf der zweiten Flachseite 32b gegenüber der Wärmequelle 28 montiert. Auch von diesem wird entsprechend Wärme, angedeutet durch Pfeile, über das Sandwichbauteil 2 beziehungsweise dessen Graphitschaumkerne oder -leisten abtransportiert. Weitere Kühlmaßnahmen an Wärmequelle 28 und Versorgungsgerät 36 als weitere Wärmequelle müssen daher nicht vorgesehen werden.

### Bezugszeichenliste

- 2: Sandwichbauteil
- 4a,b: Deckschicht
- 6: Kernschicht
- 8a,b: erstes, zweites Strukturelement
- 10: Längslinie
- 12: Prepreg-Material (dünn)
- 14: Umhüllung
- 16: Prepreg-Material (dick)
- 18: Deckabschnitt
- 20: Stegabschnitt
- 24: Paneel
- 26: Tragelement
- 28: Wärmequelle
- 30: Linie
- 32a,b: Flachseite
- 34: Randbereiche
- 36: Versorgungsgerät

## Patentansprüche

1. Paneel (24) für ein Fluggerät mit einem Tragelement (26) und einer auf dem Tragelement (26) angebrachten Wärmequelle (28), wobei das Tragelement (26) ein Sandwichbauteil (2) enthält, wobei das Sandwichbauteil (2) mindestens zwei Deckschichten (4a,b) in Form von Prepreg-Material und mindestens einer zwischen den Deckschichten (4a,b) angeordneten Kernschicht (6) aufweist und wobei die Kernschicht (6) mindestens ein erstes Strukturelement (8a) in Form eines mechanisch instabilen Wärmeleitmaterials und mindestens ein zweites Strukturelement (8b) in Form eines mechanisch stabilen Prepreg-Materials enthält.

2. Paneel (24) nach Anspruch 1,
**dadurch gekennzeichnet, dass**
das Wärmeleitmaterial ein Graphitschaum ist.

3. Paneel (24) nach einem der vorhergehenden Ansprüche,
**dadurch gekennzeichnet, dass**
das zweite Strukturelement (8b) mit beiden Deckschichten (4a,b) verbunden ist.

4. Paneel (24) nach Anspruch 3,
**dadurch gekennzeichnet, dass**
- die Kernschicht (6) eine Mehrzahl von ersten Strukturelementen (8a) enthält, die leistenartig ausgebildet sind und die sich jeweils entlang einer Längslinie (10) erstrecken, wobei die Längslinien (10) nebeneinander verlaufen, und
- je mindestens ein zweites Strukturelement (8b) in Form eines die Deckschichten (4a,b) verbindenden Steges zwischen zwei benachbarten ersten Strukturelementen (8a) angeordnet ist.

5. Paneel (24) nach einem der vorhergehenden Ansprüche,
**dadurch gekennzeichnet, dass**
das Sandwichbauteil (2) ein Einbauteil für ein Fluggerät ist.

6. Paneel (24) nach einem der vorhergehenden Ansprüche,
**dadurch gekennzeichnet, dass**
die Wärmequelle (28) eine Lichtquelle ist.

7. Paneel (24) nach Anspruch 6,
**dadurch gekennzeichnet, dass**
die Lichtquelle eine LED-Lichtquelle ist.

8. Paneel (24) nach einem der vorhergehenden Ansprüche,
**dadurch gekennzeichnet, dass**
die Wärmequelle (28) eine sich flächig erstreckende Lichtquelle ist, die auf eine Flachseite (32a) des Tragelements (26) aufgebracht ist.

9. Paneel (24) nach einem der vorhergehenden Ansprüche,
**dadurch gekennzeichnet, dass**
die Wärmequelle (28) sich über die gesamte Flachseite (32a) des Tragelements (26) erstreckt.

10. Paneel (24) nach einem der Ansprüche 6 bis 9,
**dadurch gekennzeichnet, dass**
das Paneel (24) ein Versorgungsgerät (36) für die Wärmequelle (28) enthält, das auf der der Wärmequelle (28) gegenüberliegenden Flachseite (32b) des Tragelements (26) aufgebracht ist.

## Claims

1. Panel (24) for an aerial vehicle with a supporting element (26) and a heat source (28) provided on the supporting element (26), wherein the supporting element (26) comprises a sandwich component (2), wherein the sandwich component (2) has at least two outer layers (4a,b) in the form of prepreg material and at least one core layer (6) arranged between the outer layers (4a,b) and wherein the core layer (6) comprises at least one first structural element (8a) in the form of a mechanically unstable heat-conducting material and at least one second structural element (8b) in the form of a mechanically stable prepreg material.

2. Panel (24) according to Claim 1,
**characterized in that**
the heat-conducting material is a graphite foam.

3. Panel (24) according to one of the preceding claims, **characterized in that**
the second structural element (8b) is connected to both outer layers (4a,b).

4. Panel (24) according to Claim 3,
**characterized in that**
- the core layer (6) comprises a plurality of first structural elements (8a), which are formed in a strip-like manner and which in each case extend along a longitudinal line (10), wherein the longitudinal lines (10) run next to one another, and
- at least one second structural element (8b) in the form of a web connecting the outer layers (4a,b) is respectively arranged between two adjacent first structural elements (8a).

5. Panel (24) according to one of the preceding claims, **characterized in that**
the sandwich component (2) is a fitting for an aerial vehicle.

6. Panel (24) according to one of the preceding claims, **characterized in that**
the heat source (28) is a light source.

7. Panel (24) according to Claim 6,
**characterized in that**
the light source is an LED light source.

8. Panel (24) according to one of the preceding claims, **characterized in that**
the heat source (28) is a light source of a two-dimensional extent, which is mounted on one flat side (32a) of the supporting element (26).

9. Panel (24) according to one of the preceding claims, **characterized in that**
the heat source (28) extends over the entire flat side (32a) of the supporting element (26).

10. Panel (24) according to one of Claims 6 to 9, **characterized in that**
the panel (24) comprises a supply device (36) for the heat source (28), which is mounted on the flat side (32b) of the supporting element (26) opposite from the heat source (28).

## Revendications

1. Panneau (24) pour un engin volant, comprenant un élément porteur (26) et une source de chaleur (28) montée sur l'élément porteur (26), l'élément porteur (26) contenant un composant en sandwich (2), le composant en sandwich (2) possédant au moins deux couches de recouvrement (4a, b) sous la forme d'un matériau préimprégné et au moins une couche centrale (6) disposée entre les couches de recouvrement (4a, b) et la couche centrale (6) contenant au moins un premier élément de structure (8a) sous la forme d'un matériau thermoconducteur mécaniquement instable et au moins un deuxième élément de structure (8b) sous la forme d'un matériau préimprégné mécaniquement stable.

2. Panneau (24) selon la revendication 1, **caractérisé en ce que** le matériau thermoconducteur est une mousse de graphite.

3. Panneau (24) selon l'une des revendications précédentes, **caractérisé en ce que** le deuxième élément de structure (8b) est relié aux deux couches de recouvrement (4a, b).

4. Panneau (24) selon la revendication 3, **caractérisé en ce que**
- la couche centrale (6) contient une pluralité de premiers éléments de structure (8a) qui sont configurés à la manière de baguettes et qui s'étendent respectivement le long d'une ligne longitudinale (10), les lignes longitudinales (10) s'étendant les unes à côté des autres, et
- au moins un deuxième élément de structure (8b) est à chaque fois disposé entre deux premiers éléments de structure (8a) voisins sous la forme d'un élément jointif qui relie les couches de recouvrement (4a, b).

5. Panneau (24) selon l'une des revendications précédentes, **caractérisé en ce que** le composant en sandwich (2) est une pièce de montage pour un engin volant.

6. Panneau (24) selon l'une des revendications précédentes, **caractérisé en ce que** la source de chaleur (28) est une source de lumière.

7. Panneau (24) selon la revendication 6, **caractérisé en ce que** la source de lumière est une source de lumière à LED.

8. Panneau (24) selon l'une des revendications précédentes, **caractérisé en ce que** la source de chaleur (28) est une source de lumière qui s'étend de manière plane, laquelle est appliquée sur un côté plat (32a) de l'élément porteur (26).

9. Panneau (24) selon l'une des revendications précédentes, **caractérisé en ce que** la source de chaleur (28) s'étend sur tout le côté plat (32a) de l'élément porteur (26).

10. Panneau (24) selon l'une des revendications 6 à 9, **caractérisé en ce que** le panneau (24) contient un appareil d'alimentation (36) pour la source de chaleur (28), lequel est appliqué sur le côté plat (32b) de l'élément porteur (26) à l'opposé de la source de chaleur (28) .
